# EUROPEAN PATENT APPLICATION

(11) **EP 4 324 767 A1**
(43) Date of publication of application: **21.02.2024**
(21) Application number: 22880189.0
(22) Date of filing: 30.09.2022
(51) Int. Cl.: B65D 90/52, B65D 90/22, B65D 90/00, B60K 15/077, B60P 3/22

(54) **TANK CONTAINER, LIQUID TANK, AND WAVE-PROOF PLATE FOR LIQUID TANK**

(30) Priority: 12.10.2021 CN 202111189559
(71) Applicant: CIMC SAFEWAY TECHNOLOGIES CO., LTD., Nantong Jiangsu 226003 (CN)
(72) Inventor: ZHU, Hongjun, Nantong, Jiangsu 226003 (CN); LI, Xiuli, Nantong, Jiangsu 226003 (CN); CHEN, Xiaochun, Nantong, Jiangsu 226003 (CN); LI, Lang, Nantong, Jiangsu 226003 (CN); MENG, Qingguo, Nantong, Jiangsu 226003 (CN); SHEN, Fanjing, Nantong, Jiangsu 226003 (CN); ZHANG, Yuguo, Nantong, Jiangsu 226003 (CN); ALEX, McGonagle, Nantong, Jiangsu 226003 (CN); ZHANG, Yan, Nantong, Jiangsu 226003 (CN)
(74) Representative: Studio Torta S.p.A.
(86) International application number: PCT/CN2022/123166
(87) International publication number: WO 2023/061250

(57) **Abstract**

A wave-proof plate (2) for a liquid tank (100). The wave-proof plate (2) comprises: a peripheral contour (21) configured to be at least partially connected to the inner wall of a tank body (1) of the liquid tank (100); a free edge (22) connected to two opposite ends of the peripheral contour (21), and passing through an inner cavity of the tank body (1) when the wave-proof plate (2) is mounted in the tank body (1) of the liquid tank (100); and a wall region (23) which is a single-layer wall member, extends between the peripheral contour (21) and the free edge (22), and is curved. Viewed from a reference plane perpendicular to the free edge (22), the projection of the wall region (23) on the reference plane is a curve having a continuously variable curvature, any two adjacent sectors having the same length are selected on the curve at any length, and the two sectors have different curvature variations. Further provided are a liquid tank (100) having the wave-proof plate (2) and a tank container.

## Description

The present application claims the priority of a Chinese patent application No. 202111189559.X entitled "TANK CONTAINER, LIQUID TANK AND WAVE-PROOF PLATE FOR LIQUID TANK", filed with the NATIONAL INTELLECTUAL PROPERTY ADMINSTRATION, PRC on October 12, 2021, and the entire contents of which are incorporated herein by reference.

### TECHNICAL FIELD

The present application relates to the technical field of storage and transportation equipment, in particular to a tank container, a liquid tank and a wave-proof plate for the liquid tank.

### BACKGROUND

Liquid tank is a container for transporting liquid medium. When the liquid tank decelerates or accelerates during transportation, the liquid medium will splash. It is better to install a wave-proof plate in the liquid tank to reduce the splash of the liquid medium, and the wave-proof plate extends along the transverse direction of the liquid tank. According to the requirements of relevant specifications, the wave-proof plate usually covers more than 70% of the cross section of the inner cavity of the liquid tank. In the axial direction of the liquid tank, a plurality of wave-proof plates are usually arranged, and openings for people to pass through are arranged on the wave-proof plates. These wave-proof plates divide the inner cavity of the liquid tank into a plurality of chambers communicated with each other through the openings.

A typical wave-proof plate is constructed in a transverse direction of the tank as a monolithic structure having an opening in the monolithic structure or an opening formed between the monolithic structure and the inner wall of the tank. However, this structure would require a separate sprinkler head hole for each chamber separated by the wave-proof plate for the sprinkler head to clean the inside of the liquid tank. When the number of wave-proof plates is large, more spraying heads are needed, and the cleaning process is complicated. In addition, in order to ensure the stiffness requirements, more material is required to manufacture the wave-proof plate, increasing the weight of the wave-proof plate.

In some related technologies, there are also wave-proof plates arranged in pairs along the lateral side of the liquid tank, forming an opening between the two wave-proof plates for personnel to pass through. Through the opening defined by the two wave-proof plates, the spraying head can flush the two adjacent chambers separated by the wave-proof plates conveniently. This kind of wave-proof plate is structured by several arc-shaped wall areas with different curvature. However, due to the complex load situation on various parts within the liquid tank, the arc-shaped wall area may be difficult to match the load situation in some cases, so it needs further improvement.

### SUMMARY

It is an object of the present disclosure to provide a wave-proof plate for a liquid tank to better match loads.

Another object of the present disclosure is to provide a liquid tank with a wave-proof plate and a tank container.

To solve the above technical problems, the present invention adopts the following technical solution:

According to an aspect of the present disclosure, provided is a wave-proof plate for a liquid tank, which includes:
an outer peripheral profile configured to be at least partially connected to an inner wall of a tank body of the liquid tank;
a free edge connecting two opposite end portions of the outer peripheral profile and passing through an inner cavity of the tank body when the wave-proof plate is mounted into the tank body of the liquid tank; and
a wall area, being a single-layer wall member, extending between the outer peripheral profile and the free edge and in a curved shape, wherein as viewed from a reference plane perpendicular to the free edge, a projection of the wall area on the reference plane presents a curve of continuous curvature variation, wherein two arbitrary adjacent sectors of the same length are selected at any length on the curve, the two sectors having different curvature variation.

Optionally, a distance between end points of the curve is less than half of an inner diameter of the tank, and a projection depth of the curve on an axis of the tank is less than or equal to one fifth of the inner diameter of the tank.

Optionally, a straight line parallel to the axis of the tank body and facing one end of the tank body is used as a reference line, and an included angle between a tangent line at each position of the curve and the reference line is greater than 0° and less than 180°.

Optionally, an angle θ between the tangent line at a position where the curve is connected to an end point of one end of the tank and the reference line satisfies: 60°≤ θ ≤ 120°.

Optionally, the free edge is provided with a reinforcing portion along a length direction of the free edge.

Optionally, the reinforcing portion is a reinforced profile attached to the free edge, and a length of the reinforced profile is consistent with a length of the free edge.

According to another aspect of the present disclosure, provided is a liquid tank including a tank body and the wave-proof plate mounted in the tank body as descried above, the wave-proof plate being arranged in pairs in the tank body transversely along the tank body, and an opening is defined between the pair of wave-proof plates.

According to yet another aspect of the present disclosure, provided is a tank container including the liquid tank as described above and a frame supporting the liquid tank.

As can be seen from the technical solution, the present disclosure has at least the following advantages and positive effects: in the wave-proof plate of the present disclosure, the wall area mainly bears the impact load of liquid medium in the tank, by adopting the curve shape with continuous curvature variation, the shapes of all parts of the wall area can be more easily matched with the load it bears, thereby reducing the stress of the wave-proof plate and maintaining the stability of the wave-proof plate to continuously prevent the liquid medium from splashing. Compared with the wall area with an arc-shaped structure or a flat plate structure, the curve with continuous curvature variation projected by the wall area of the wave-proof plate in the present disclosure is constructed by smaller elements, different shapes of the elements can be designed to meet the structural strength requirements according to the loads that need to be borne at different positions in the wall area, and the wave-proof plate with curve shape matching with the actual load situation can be obtained by combining the elements. The contribution of the curve shape to the strength is beneficial to reduce the thickness of the wave-proof plate, so as to reduce the amount of materials used. In addition, the need for additional reinforcement on the edge of the wave-proof plate can be reduced, and the cost and complicated manufacturing process can be reduced

### BRIEF DESCRIPTION OF THE DRAWINGS

FIG. 1 is a structural schematic diagram of a liquid tank according to an embodiment of the present disclosure.
FIG. 2 is a schematic diagram of one wave-proof plate in FIG. 1.
FIG. 3 is a schematic cross-sectional view of FIG. 1.
FIG. 4 is an F-F sectional view of FIG. 3.
FIG. 5 is a schematic diagram of a small section taken from FIG. 4 for showing a curve feature.
FIGS. 6-11 are schematic diagrams of other embodiments in a same orientation as the view in FIG. 4.
FIG. 12 is a top view of FIG. 1, with a simple illustration of the wave-proof plate in solid lines and a clean state in dashed lines.
FIG. 13 is a structural schematic diagram according to another embodiment of the wave-proof plate.
FIG. 14 is a partially enlarged view at part G of FIG. 13.
FIG. 15 is a J-J sectional view of FIG. 14.

Reference signs: 100. liquid tank; 1. tank body; 11. cylinder; 111. manhole; 112. flushing port; 12. head; 13. backing plate; 104. chamber; 2. wave-proof plate; 201. opening; 21. outer peripheral profile; 22. free edge; 23. wall area; 24. reinforced profile

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Exemplary embodiments embodying the features and advantages of the present disclosure will be described in detail in the following description. It is to be understood that the present disclosure is capable of various variations in different embodiments without departing from the scope of the present disclosure and that the description and illustrations therein are intended to be illustrative in nature and not to limit the present disclosure.

In the description of the present application, it should be understood that orientation or positional relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", etc. are based on the orientation or positional relationships shown in the drawings, for ease of description of the present application and simplification of the description only, these terms do not indicate or imply that the apparatus or element referred to must have a specific orientation or be constructed and operated in a specific orientation, and therefore cannot be construed as limitations to the present application. In addition, the terms of "first", "second" are for descriptive purposes only and cannot be construed as indicating or implying relative importance or implying the number of the indicated technical features. Thus, the features defined as "first" or "second" may be explicitly or implicitly defined as including one or more of the features. In the description of the present application, "multiple" means two or more unless otherwise expressly specified.

The present disclosure provides a wave-proof plate, a liquid tank with the wave-proof plate and a tank container. The liquid tank is used for holding liquid medium, and a plurality of wave-proof plates are arranged inside the liquid tank to reduce splashing of liquid medium. The liquid tank can be fixedly mounted on a transport vehicle for transport with the vehicle, or can be installed on the transport vehicle along with the tank container as a component of the tank container. The tank container supports the liquid tank through a frame, and the specific structural form of the frame can refer to relevant technologies without specific limitation. The transport vehicle on which the liquid tank or tank container is mounted may be, for example, a road transport vehicle, a railway transport vehicle, etc.

The liquid tank and the wave-proof plate of the present disclosure are described in detail below with reference to the accompanying drawings. The structure of the embodiment of the tank container is not shown herein, however it can be understood that the structure of the tank container is mainly provided with a frame on the periphery of the liquid tank. As for the specific structure of the frame and the connection relationship between the frame and the liquid tank, reference can be made to the related technology of the tank container, which is not limited herein.

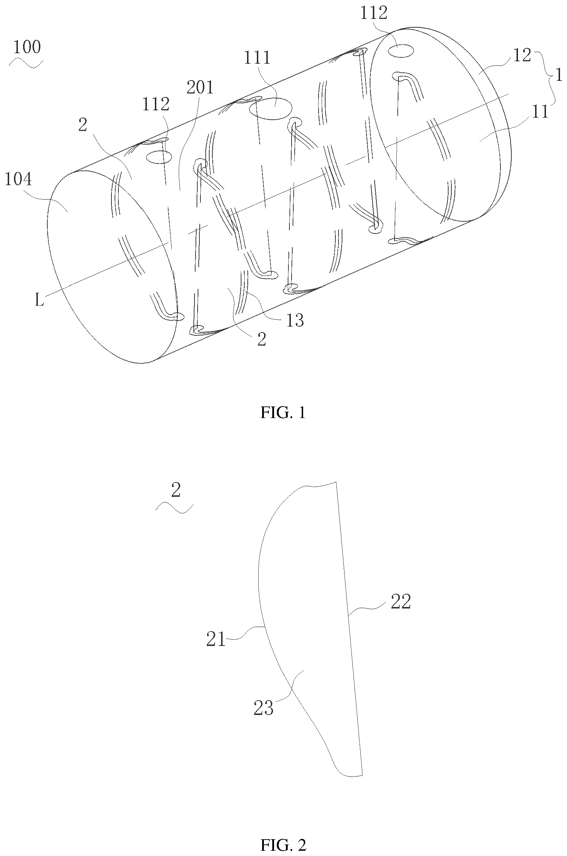

FIG. 1 illustrates a structure of a liquid tank 100 according to an embodiment. The liquid tank 100 mainly includes a tank body 1 and a plurality of wave-proof plates 2 installed in the tank body 1.

The tank body 1 has a horizontal structure, and its axis L extends in the horizontal direction. The tank body 1 generally includes a cylinder 11 and two heads 12 closing both ends of the cylinder 11. In this embodiment, the cylinder 11 is a round cylinder having a circular cross section, and in other embodiments, the cross section of the cylinder 11 may not be limited to a circular shape. The head 12 may be an elliptical head, a butterfly head, a spherical head, or the like. The tank body 1 may be either a single-layer tank or a double-layer tank depending on the nature of the liquid medium contained therein. The material of the tank body 1 may be a metal, such as carbon steel, stainless steel, or the like, or a nonmetal, such as carbon fiber, composite glass fiber, fiber reinforced plastic, or the like.

The top of the tank body 1 is provided with a manhole 111 at the middle part thereof, and the top of the tank body 1 is provided with a flushing port 112 at its front and rear, respectively. Dimensionally, a diameter of the manhole 111 is larger than a diameter of the flushing port 112. The manhole 111 is used for the entry and exit of a person inside the tank body 1, and the diameter of the manhole 111 is generally more than 500 mm. The flushing port 112 is used for flushing the inside of the tank body 1 by a flushing device.

The wave-proof plates 2 are arranged in pairs transversely along the tank body 1 in the inside of the tank body 1, that is, in a cross section of the tank body 1 perpendicular to its axis, two wave-proof plates 2 are provided, the two wave-proof plates 2 are respectively attached to the side walls of the tank body 1, and a passable opening 201 is defined between the two wave-proof plates 2.

In the axial direction of the tank body 1, a plurality of pairs of wave-proof plates 2 are arranged at intervals. The configuration of three pairs of wave-proof plates 2 is illustrated in FIG. 1, whereby the inside of the tank body 1 is divided into four chambers 104, two adjacent chambers 104 being communicated by the opening 201 defined by a pair of wave-proof plates 2. The openings 201 of the three pairs of the wave-proof plates 2 may or may not be fully aligned, but they may rotate relatively about the axis L of the tank body 1. One pair of wave-proof plates 2 is disposed at the cross section where the manhole 111 is located and the other two pairs of wave-proof plates 2 are each near the flushing port 112.

In conjunction with FIGS. 1 and 2, the wave-proof plate 2 has an outer peripheral profile 21 connected to an inner wall of the tank body 1, free edges 22 connecting opposite end portions of the outer peripheral profile 21, and a wall area 23 extending between the outer peripheral profile 21 and the free edges 22 in a curved shape.

The outer peripheral profile 21 may be configured to at least partially opposite to the inner wall profile of the tank body 1, and in this embodiment, the outer peripheral profile 21 completely corresponds to the shape of the inner wall profile on one side of the tank body 1, so that the connection between the wave-proof plate 2 and the tank body 1 is more reliable. Specifically, the outer peripheral profile 21 is connected to the inner wall of the tank body 1 via a backing plate 13 attached to the inner wall of the tank body 1 to reduce the stress at the connection between the wave-proof plate 2 and the tank body 1. Opposite end portions of the outer peripheral profile 21 are located in the top and bottom regions of the tank body 1, respectively.

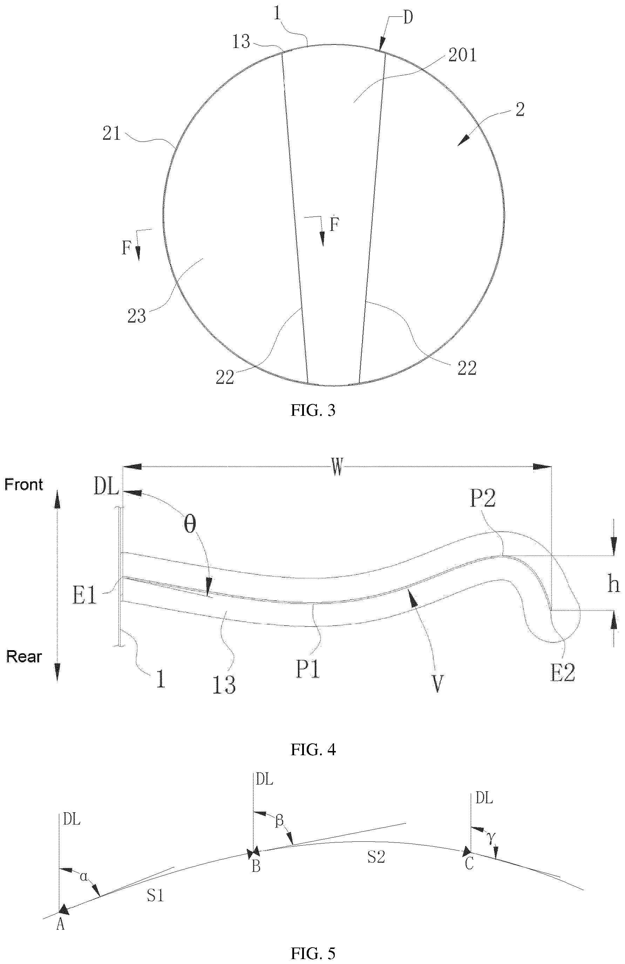

As shown in FIG. 2, the outer peripheral profile 21 is in the shape of a spatial curve, which is the shape formed by combining the curved wall area 23 with the inner wall profile of the tank body 1. As shown in FIG. 3, the projection of the outer peripheral profile 21 on the cross section of the tank body 1 is arc-shaped.

The free edges 22 are connected linearly to opposite end portions of the outer peripheral profile 21, thereby passing through the inner cavity of the tank body 1 in the up-down direction. The free edges 22 of a pair of wave-proof plates 2 arranged in pairs transversely along the tank body 1 face each other and define the opening 201. As shown in FIG. 3, the free edge 22 extends obliquely within the tank body 1 such that the opening 201 is designed to be large at the top and small at the bottom, the portion of the opening 201 in the top region of the tank body 1 is larger than the portion of the opening 201 in the bottom region of the tank body 1.

The wall area 23 is a single-layer wall member, thereby facilitating the formation of an easy-to-clean surface. Referring to FIG. 4, as seen from a reference plane perpendicular to the free edge 22, the projection of the wall area 23 on the reference plane presents a curve V of continuous curvature variation, wherein two arbitrary adjacent sectors of the same length are selected at any length on the curve V, the two sectors have different curvature variation.

The wall area 23 mainly bears the impact load of liquid medium in the tank, by adopting the curve shape above, the shapes of all parts of the wall area 23 can be more easily matched with the load it bears, thereby reducing the stress of the wave-proof plate 2 and maintaining the stability of the wave-proof plate 2 to continuously prevent the liquid medium from splashing. Compared with the wall area with an arc-shaped structure or a flat plate structure, the curve V with continuous curvature variation is constructed by smaller elements, different shapes of the elements can be designed to meet the structural strength requirements according to the loads that need to be borne at different positions in the wall area 23, and the wave-proof plate 2 with a curve shape matching with the actual load situation can be obtained by combining the elements. The contribution of the curve shape to the strength is beneficial to reduce the thickness of the wave-proof plate 2, so as to reduce the amount of materials used. In addition, the need for additional reinforcement on the edge of the wave-proof plate 2 can be reduced, and the cost and complicated manufacturing process can be reduced.

FIG. 5 illustrates a small section cut from the curve V Nodes A, B and C define two adjacent sectors S 1 and S2 of equal length. The rate of change in curvature of the sector S 1 is a difference between tangent slopes of the node A and the node B, and the rate of change in curvature of the sector S2 is a difference between tangent slopes of the node B and the node C.

A straight line parallel to the axis L of the tank body 1 and facing one end of the tank body 1 is a reference line DL, an angle between a tangent line at the node A and the reference line DL is α, an angle between a tangent line at the node B and the reference line DL is β, and an angle between a tangent line at the node C and the reference line DL is γ, the following relationship exists: (α-β) ≠ (β-γ).

α, β and γ are all greater than 0° and less than 180°, and the specific values of α, β and γ are determined according to the load conditions of the curve at these places.

In particular, however, as shown in FIG. 4, an angle θ between the tangent line of the curve V connecting the end point E1 of the tank body 1 and the reference line DL preferably satisfies: 60° ≤ θ ≤ 120°. Therefore, the included angle space at the position where the wave-proof plate 2 is connected with the tank body 1 will not be a long and narrow cleaning blind angle, which is more convenient for cleaning.

Based on the corresponding parameters of the liquid tank 100 to be applied and the properties of the wave-proof plate 2 itself, the curved shape of the wave-proof plate 2 can be obtained in the following manner, subject to the above-mentioned rules.

First, determining relevant parameters, where these parameters are related to the load and stress of the wave-proof plate 2 in the tank body 1, such as:
1. attribute parameters of wave-proof plate 2, such as material thickness, allowable stress, Young's modulus and Poisson's ratio;
2. allowable buckling coefficient of wave-proof plate 2;
3. attribute parameters of tank body 1, such as material thickness, inner diameter D of the tank body 1, allowable stress of material, Young's modulus and Poisson's ratio; and
4. density and height of liquid medium contained in tank body 1.

The above parameters can be determined after the conditions of the tank 100 are given, and the effects of each parameter on the load and stress can be referred to the relevant formulae.

Second, setting numerical iteration to solve the curve of wave-proof plate 2. The maximum stress of each curve solved is solveed based on the above parameters by finite element analysis. The process is roughly as follows:
1. a distance of the sectors along the curve is selected such that Sn = S (n+1) = S (n+2) = ..., etc.;
2. slopes are randomly applied at the first three nodes N (n), N(n+1) and N (n+2), respectively, such as α, β, γ between the limits of 0° to 180° as illustrated in FIG. 5, such that (α-β) ≠ (β-γ);
3. the slopes are randomly applied at the next node N (n+3) and, as in the previous step, the slope change between nodes N (n+1) and N (n+2) is not equal to the slope change between N (n+2) and N (n+3);
4. by analogy, until the end of the curve, i.e., the boundary of the wave-proof plate 2, is reached, a complete geometry of the wave-proof plate 2 is defined;
5. finite element analysis is carried out on the obtained geometric shape, and the maximum stress is solved. If the maximum stress is lower than the previously stored maximum stress, the geometric shape and the corresponding maximum stress are recorded; and
6. the next iteration starts following Step 2 in this part.

Third, by virtue of the computational power of the finite element analysis software, the geometry with the smallest possible maximum stress is finally obtained as the final curve V shape of the wave-proof plate 2.

It should be noted that FEA (Finite Element Analysis) is a common tool for stress analysis by those skilled in the art, and the process of solving the maximum stress by specific analysis is not described in detail.

For ease of presentation, a front-rear direction as indicated by an arrow is defined in FIG. 4. In the view of FIG. 4, the direction "down" is defined as "front" and the opposite direction is "rear". The definition of the front-rear direction coincides with the front-rear direction of the liquid tank 100 illustrated in FIG. 1, that is, the extension direction of the axis L of the tank body 1.

The curve V illustrated in FIG. 4 extends forward from one end point E1 connected to the tank body 1, then shifts backward at a front bump P1, and then shifts forward at a rear bump P2 to the other end point E2. The curve V extends with continuous curvature variation between end points E1 and E2 at both ends.

Preferably, a distance W between the end points E1 and E2 of the curve V is less than one-half of the inner diameter D of the tank body 1, and the projection depth h of the curve V on the axis L of the tank body 1, i.e., in the front-rear direction, is less than or equal to one-fifth of the inner diameter D of the tank body 1. It is expressed by mathematical relation: W < D/2, h ≤ D/5. Therefore, the curve V is bent in the front-rear direction to such an extent that there is no cavity on the wave-proof plate 2 that is difficult to clean, and the material consumption of the wave-proof plate 2 is not excessive, which is beneficial to reducing the weight of the wave-proof plate 2.

In the curve V shown in FIG. 4, the end point E2 is the foremost end of the curve V protruding forward, and the rear bump P2 is the rearmost end of the curve V protruding backward. The projection depth h of the curve V on the axis L of the tank body 1 is the distance between the end point E2 and the rear bump P2 in the front-rear direction.

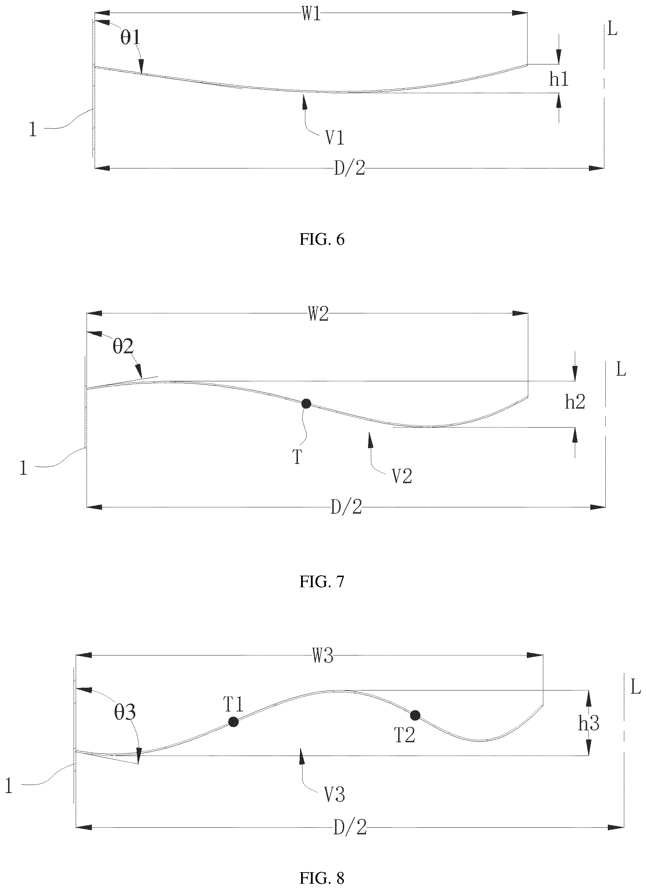

FIGS. 6 to 10 illustrate shapes of the projected curve of the wall area 23 of the wave-proof plate 2 according to other embodiments.

When viewed from the inner wall of the tank body 1 in the direction of the axis L, the curve V1 illustrated in FIG. 6 extends forward and then backward from one end connected to the tank body 1 to the end point of the other end. The angle θ1 between the tangent line at the end point of the curve V1 connected to the tank body 1 and the reference line satisfies: 60° ≤ θ1 ≤ 120°, the distance W1 between the end points of the curve V1 is smaller than D/2, and the projection depth h1 of the curve V1 on the axis L of the tank body 1 is equal to or smaller than D/5.

The curve V2 illustrated in FIG. 7 extends backward from one end connected to the tank body 1, then extends forward through an inflection point T to the foremost end, and then extends backward to the end point of the other end. The angle θ2 between the tangent line at the end point of the curve V2 connected to the tank body 1 and the reference line satisfies: 60° ≤ θ2 ≤ 120°, the distance W2 between the end points of the curve V2 is smaller than D/2, and the projection depth h2 of the curve V2 on the axis L of the tank body 1 is equal to or smaller than D/5.

The curve V3 illustrated in FIG. 8 extends forward for a short distance from one end where it is connected to the tank body 1, then continues to extend backward to the rearmost end after passing the inflection point T1, then continues to extend forward after passing the inflection point T2, and finally extends backward to the end point of the other end. The angle θ3 between the tangent line at the end point of the curve V3 connected to the tank body 1 and the reference line satisfies: 60° ≤ θ3 ≤ 120°, the distance W3 between the end points of the curve V3 is smaller than D/2, and the projection depth h3 of the curve V3 on the axis L of the tank body 1 is equal to or smaller than D/5.

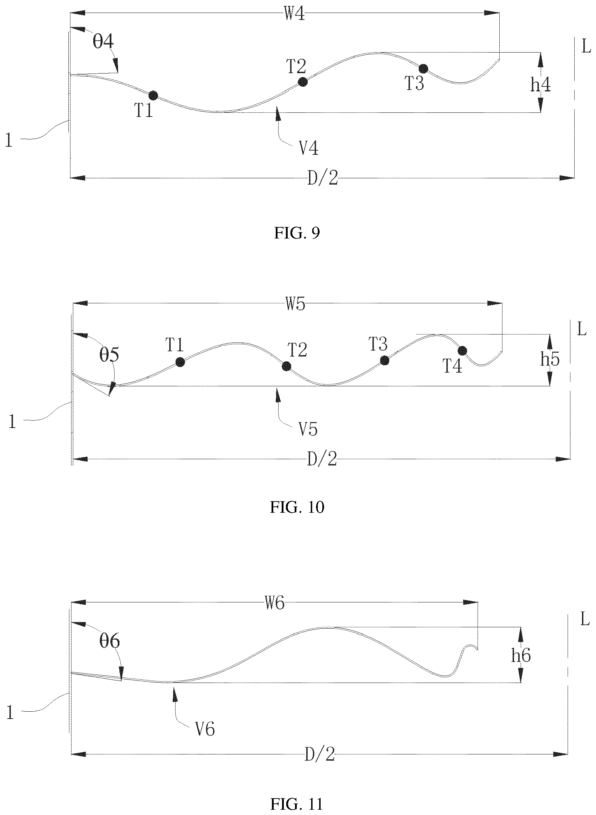

The curve V4 illustrated in FIG. 9 extends backward for a short distance from one end connected with the tank body 1, then continuous to extending forward to the foremost end after passing the inflection point T1, then extends backward to the rearmost end after passing an inflection point T2, then extends forward, and continuous to extending forward after passing an inflection point T3, then extends forward for a long time and then extends backward to the end point of the other end. The angle θ4 between the tangent line at the end point of the curve V4 connected to the tank body 1 and the reference line satisfies: 60° ≤ θ4 ≤ 120°, the distance W4 between the end points of the curve V4 is smaller than D/2, and the projection depth h4 of the curve V4 on the axis L of the tank body 1 is equal to or smaller than D/5.

The curve V5 illustrated in FIG. 10 extends forward from one end where the curve is connected to the tank body 1 to the foremost end, then turns to extending backward, continues to extending backward after passing through inflection point T1, then turns to extending forward, continues to extending forward after passing through inflection point T2, then extends backward, extends backward to the rearmost end after passing through inflection point T3, extends forward again, extends forward after passing through inflection point T4, and finally extends backward to the end point of the other end. The angle θ5 between the tangent line at the end point of the curve V5 connected to the tank body 1 and the reference line satisfies: 60° ≤ θ5 ≤ 120°, the distance W5 between the end points of the curve V5 is smaller than D/2, and the projection depth h5 of the curve V5 on the axis L of the tank body 1 is equal to or smaller than D/5.

The curve V6 illustrated in FIG. 11 extends from one end where the curve is connected to the tank body 1 forward to the foremost end, then extends backward to the rearmost end, then turns to extending forward, then turns to extending backward, and finally to the end point of the other end for a short distance. The angle θ6 between the tangent line at the end point of the curve V6 connected to the tank body 1 and the reference line satisfies: 60° ≤ θ6 ≤ 120°, the distance W6 between the end points of the curve V6 is smaller than D/2, and the projection depth h6 of the curve V6 on the axis L of the tank body 1 is equal to or smaller than D/5.

As several curves of different shapes projected by the wall area 23 have been illustrated above, it can be understood that for a curve of continuous curvature projected by the wall area 23 on the reference plane, there is no limit to the forward and backward curving directions of the curve, and there is no limit to the number of changes in the curving direction of the curve. Meanwhile, the length of the curve extending forward or backward, and the specific curvature or slope of a certain position of the curve can be flexibly set according to the actual situation. It will be understood that the greater the rate of change in curvature, the greater the degree of curvature of the curve, so that the load-bearing capacity of the wall area 23 at this location can be increased. For example, the curve V6 shown in FIG. 11 is relatively more curved at a portion close to the axis L of the tank body 1, and accordingly, the end close to the tank body 1 has better load bearing capacity, which can improve the stiffness of the end of the wave-proof plate 2 close to the free edge 22 and better match the stress working condition when the wave-proof plate 2 is installed in the tank body 1.

When the curve shape is set in actual application, an appropriate curve shape can be obtained according to the method described above. When numerical iteration is carried out based on the stress state obtained by finite element analysis, the extension direction and curvature of the curve can be adjusted appropriately to obtain a better curve solution.

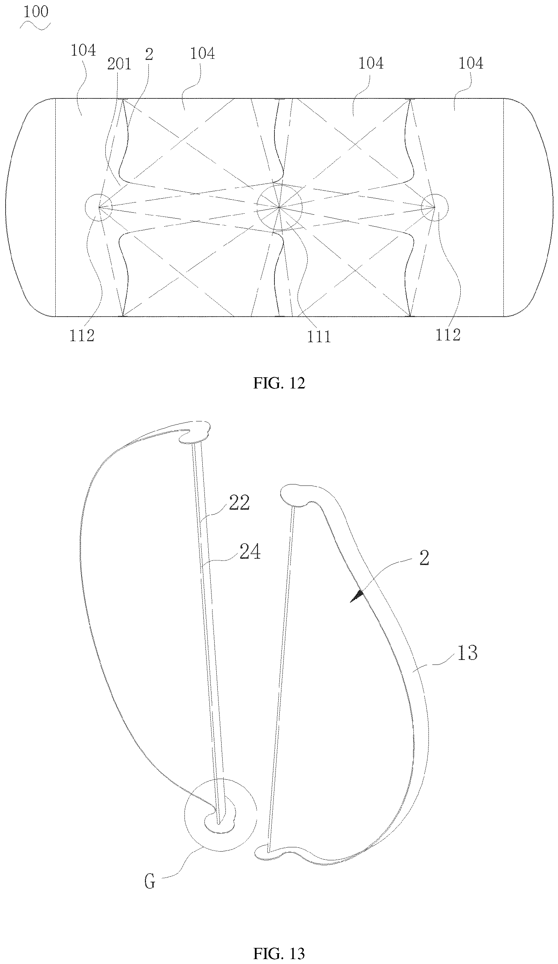

Referring again to FIG. 12, flushing devices are provided at the manhole 111 and the two flushing ports 112 respectively during cleaning of the liquid tank 100 on which the wave-proof plate 2 is mounted. The main flushing range of each flushing device is illustrated in dashed lines in FIG. 12 and the range of the flushing device can cover the adjacent chamber 104 through the opening 201 defined by a pair of wave-proof plates 2. Three flushing devices can flush the surfaces of the three pairs of wave-proof plates 2 and the four chambers 104 separated by the three pairs of wave-proof plates 2 to facilitate the overall cleaning of the liquid tank 100.

FIG. 13 illustrates the structure of the wave-proof plate 2 according to an another embodiment. In this structure, the free edge 22 of the wave-proof plate 2 is reinforced by a reinforced profile 24, the length of the reinforced profile 24 is consistent with the length of the free edge 22, the reinforced profile 24 passes through the inner cavity of the tank body 1 in the up-down direction along with the free edge 22, and the two ends of the reinforced profile 24 are respectively connected to the backing plate 13 for being connected to the inner wall of the tank body 1.

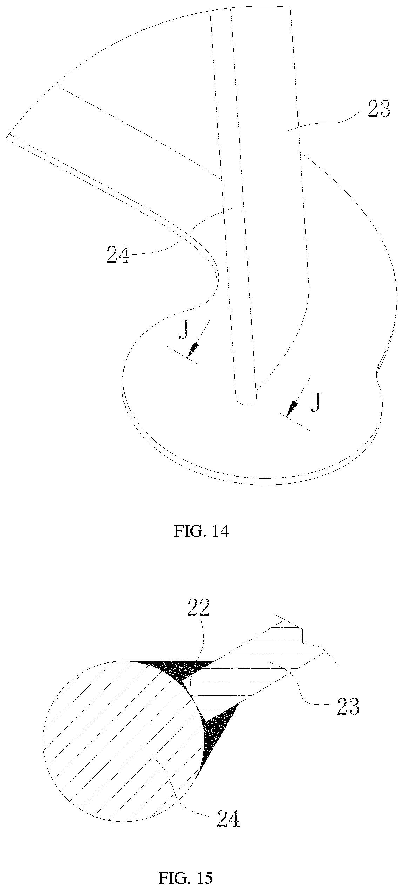

Referring to FIG. 14 and FIG. 15, in this embodiment, the cross section of the reinforcing profile 24 is circular, i.e., the reinforcing profile 24 is a round rod whose diameter is larger than the thickness of the wall area 23, and the round rod is welded and fixed to the end face of the free edge 22 and the two surfaces of the wall area 23, respectively. In other embodiments, the reinforced profile 24 may also be a rod-shaped structure of other cross-sectional shapes or a tubular profile with a hollow interior or a curved structure or the like. The cross-sectional dimensions of each of the reinforcing profiles 24 may be fixed or variable in the direction extending along the length of the free edges 22.

The free edges 22 are reinforced by forming a reinforcing portion arranged along the length direction of the free edge 22 using the reinforcing profile 24 so that the stiffness of the wave-proof plate 2 can be further increased, which is beneficial to further improving the stability of the wave-proof plate 2. In some embodiments not shown the reinforcement at the free edge 22 may also be formed by bending or profiling the free edge 22. It is to be understood that the reinforcing portion is not necessary and for example the reinforcing portion may not be present in all of the above-listed embodiments.

While the present disclosure has been described with reference to several exemplary embodiments, it should be understood that the terms used herein are illustrative and exemplary and are not limiting. Since the present disclosure can be embodied in various forms without departing from the spirit or essence of the present disclosure, it should therefore be understood that the foregoing embodiments are not limited to any of the foregoing details, but are to be interpreted broadly within the spirit and scope defined by the appended claims, so that all variations and modifications falling within the scope of the claims or their equivalents are to be covered by the appended claims.

## Claims

1. A wave-proof plate for a liquid tank, **characterized in that** the wave-proof plate comprises:
an outer peripheral profile configured to be at least partially connected to an inner wall of a tank body of the liquid tank;
a free edge connecting two opposite end portions of the outer peripheral profile and passing through an inner cavity of the tank body when the wave-proof plate is mounted into the tank body of the liquid tank; and
a wall area, being a single-layer wall member, extending between the outer peripheral profile and the free edge and in a curved shape, wherein as viewed from a reference plane perpendicular to the free edge, a projection of the wall area on the reference plane presents a curve of continuous curvature variation, wherein two arbitrary adjacent sectors of the same length are selected at any length on the curve, the two sectors having different curvature variation.

2. The wave-proof plate according to claim 1, **characterized in that** a distance between end points of the curve is less than half of an inner diameter of the tank, and a projection depth of the curve on an axis of the tank is less than or equal to one fifth of the inner diameter of the tank.

3. The wave-proof plate according to claim 2, **characterized in that** a straight line parallel to the axis of the tank body and facing one end of the tank body is used as a reference line, and an included angle between a tangent line at each position of the curve and the reference line is greater than 0° and less than 180°.

4. The wave-proof plate according to claim 3, **characterized in that** an angle θ between the tangent line at a position where the curve is connected to an end point of one end of the tank and the reference line satisfies: 60°< θ ≤ 120°.

5. The wave-proof plate according to any one of claims 1 to 4, **characterized in that** the free edge is provided with a reinforcing portion along a length direction of the free edge.

6. The wave-proof plate according to claim 5, **characterized in that** the reinforcing portion is a reinforced profile attached to the free edge, and a length of the reinforced profile is consistent with a length of the free edge.

7. A liquid tank, **characterized in** comprising a tank body and the wave-proof plate according to any one of claims 1-6 mounted in the tank body, the wave-proof plate being arranged in pairs in the tank body transversely along the tank body, and an opening is defined between the pair of wave-proof plates.

8. A tank container, **characterized in** comprising the liquid tank of claim 7 and a frame supporting the liquid tank.
